# EUROPÄISCHE PATENTSCHRIFT

(11) **EP 3 689 535 B1**
(45) Veröffentlichungstag und Bekanntmachung des Hinweises auf die Patenterteilung: **27.11.2024**
(21) Anmeldenummer: 19154724.9
(22) Anmeldetag: 31.01.2019
(51) Int. Cl.: B23Q 1/00, G05B 19/4065, B23Q 17/09, B23Q 3/155

(54) **INFORMATIONSVORRICHTUNG UND BAUGRUPPE MIT EINER SOLCHEN INFORMATIONSVORRICHTUNG**
INFORMATION DEVICE AND ASSEMBLY COMPRISING SUCH A DEVICE
DISPOSITIF D'INFORMATION ET MODULE DOTÉ D'UN TEL DISPOSITIF

(43) Veröffentlichungstag der Anmeldung: 05.08.2020
(73) Patentinhaber: CERATIZIT Besigheim GmbH, 74354 Besigheim (DE)
(72) Erfinder: Maier, Jens, 74354 Besigheim (DE); Koffler, Torsten, 74354 Besigheim (DE)
(74) Vertreter: Ciesla, Dirk

(56) Entgegenhaltungen:
- EP-A1- 1 339 014
- DE-A1- 102017 117 397
- GB-A- 2 185 130
- EVELINE GEPPERT ET AL: "Werkzeug-Prozessdaten-Protokollierung Flugschreiber f?rs Werkzeug", 1 January 2005 (2005-01-01), XP055153798, Retrieved from the Internet <URL:http://www.plastverarbeiter.de/ai/resources/bf6ee9ae0d0.pdf> [retrieved on 20141118]

## Beschreibung

Die vorliegende Erfindung betrifft eine Informationsvorrichtung zur Information über den Wartungszustand eines für eine Bearbeitung eines Werkstücks vorgesehenen Werkzeugs.

Die vorliegende Erfindung betrifft ferner eine Baugruppe, umfassend eine Informationsvorrichtung.

Hintergrund der vorliegenden Erfindung ist die Wartung von Werkzeugen, insbesondere Zerspanungswerkzeugen, so dass diese rechtzeitig repariert oder ausgetauscht werden können, um Ausfallzeiten bei der Herstellung von Bauteilen zu vermeiden.

Denn insbesondere bei der spanabhebenden Bearbeitung, zum Beispiel beim Drehen, Fräsen, Bohren, Räumen, Reiben oder dergleichen, wird typischerweise ein Werkstück, zum Beispiel ein metallisches Werkstück, in Kontakt mit einem Werkzeug, insbesondere einem Zerspanungswerkzeug, gebracht. Der Kontakt mit dem Werkstück wird im Wesentlichen an einer Schneidkante einer Schneide des Werkzeugs realisiert, so dass Späne von dem Werkstück durch die Schneide abgehoben werden.

Ein solchermaßen realisierter Kontakt führt allerdings zu Verschleißerscheinungen an der Schneidkante und damit des Werkzeugs. Bei den Verschleißerscheinungen handelt es sich zum Beispiel Kolkverschleiß, Zunderung, Spitzenausbruch, Spitzenverschleiß, Freiflächenverschleiß, Kammrisse oder Ausbrüche durch abgewanderte Aufbauschneiden und Pressschweißungen.

Den Verschleißerscheinungen liegen Verschleißursachen zugrunde. Bei den Verschleißursachen handelt es sich zum Beispiel um plastische Verformung der Schneidkante, Überbeanspruchung, Abrieb, Oxidation, Wärmewechselspannungen im Schneidkeil, Diffusion und chemische Reaktionen, abgewanderte Pressschweißung mit Hartmetall-Teilchen, Pressschweißung und Bildung einer Aufbauschneide.

Sind die Verschleißerscheinungen zu weit fortgeschritten, wirkt sich dies negativ auf die Qualität des zu bearbeitenden Werkstücks aus. Folglich muss dann die Bearbeitung des Werkstücks unterbrochen werden, bis die Schneide oder gar das gesamte Werkzeug ausgetauscht wurde. Außerdem können zu weit fortgeschrittene Verschleißerscheinungen zu einem vollständigen Versagen des Werkzeugs führen, zum Beispiel kann die Schneide brechen. In diesem Falle muss erst recht die Bearbeitung unterbrochen werden.

Daraus ergibt sich eine Lebensdauer, die ein Werkzeug tatsächlich zur spanabhebenden Bearbeitung verwendet werden kann, bis es vor allem im Bereich der Schneide nachgeschliffen oder ausgetauscht werden muss. Die Lebensdauer wird auch als Standzeit bezeichnet. Eine kurze Standzeit (kurze Lebensdauer) entspricht demnach einem großen Verschleiß und eine lange Standzeit (lange Lebensdauer) einem geringen Verschleiß. Dementsprechend ist der Wartungszustand eines Werkzeugs zeitlich veränderlich.

Als Maß für die Standzeit ist je nach dem Fertigungsverfahren auch eine der Standzeit entsprechende Anzahl durchgeführter Umdrehungen eines Werkzeugs geeignet, insbesondere im Falle eines Fräs-, Bohr- oder Reibwerkzeugs. Alternativ oder ergänzend kommt ferner eine der Standzeit entsprechende Strecke in Betracht, zum Beispiel die Strecke nach einer Vorschubbewegung des Werkzeugs relativ zu dem Werkstück oder umgekehrt.

Da eine Prognose der Lebensdauer in der Praxis nicht immer möglich ist und zudem bei der Bearbeitung eines Werkzeugs veränderliche Bedingungen auftreten können, die im günstigsten Fall zu einer Verkürzung der Lebensdauer führen, hat es sich in der Praxis bewährt, ein Werkzeug, insbesondere ein Zerspanungswerkzeug, vorbeugend dahingehend zu warten, dass es spätestens nach dem Überschreiten eines oder mehrerer vorgegebener Wartungsintervalle gewartet wird. Bei dem Wartungsintervall kann es sich zum Beispiel um eine vorgegebene Betriebsdauer des Werkzeugs, eine vorgegebene Anzahl von Umdrehungen des Werkzeugs oder eine von dem Werkzeug zurückgelegte, vorgegebene Strecke handeln. Das Wartungsintervall ist typischerweise kürzer als die Standzeit oder eine dieser entsprechende Größe. Dies erlaubt eine rechtzeitige Wartung des Werkzeugs, bevor die Standzeit erreicht ist.

Es ist daher wichtig, dass die Betriebsdauer oder eine dieser entsprechende Größe eines Werkzeugs, zum Beispiel die Anzahl von Umdrehungen des Werkzeugs oder eine von diesem zurückgelegte Strecke, dokumentiert wird, um sicher stellen zu können, dass die Standzeit oder eine dieser entsprechende Größe bzw. ein vorgegebenes Wartungsintervall eingehalten wird. Andernfalls besteht die Gefahr, dass die Standzeit oder eine dieser entsprechende Größe überschritten wird. Letzteres hat im ungünstigen Falle Stillstandzeiten hinsichtlich der Bearbeitung eines Werkstücks zur Folge. Die Produktivität würde sich verringern und die Stückkosten der entsprechend hergestellten Produkte steigen.

Durch eine regelmäßige und frühzeitige Planung der Wartung, also insbesondere die Überprüfung, der Austausch oder die Reparatur eines Werkzeugs, insbesondere eines Werkzeugs mit einer oder mehreren Schneiden, kann schließlich die Lebensdauer des Werkzeugs und damit die Wirtschaftlichkeit einer Produktionsanlage insgesamt erhöht und die Gefahr eines Maschinenstillstands reduziert oder sogar vermieden werden.

Typischerweise hinterlegt ein Nutzer für die Wartung eines Werkzeugs erforderliche Informationen, zum Beispiel Informationen über die Betriebsdauer des Werkzeugs, oder sonstige Informationen, zum Beispiel über eine Kennzeichnung des Werkzeugs, am Ort des Werkzeugs in Papierform. Dies ist für den Nutzer in der Regel aber ergonomisch ungünstig. Außerdem können Übertragungsfehler bei einer solchermaßen durchgeführten manuellen Hinterlegung der Informationen auftreten, zum Beispiel Zahlendreher oder sonstige Irrtümer.

Aus der DE 10 2013 016 185 A1 ist zwar bekannt, dass eine Codierung C an der Außenseite des Werkzeugs angeordnet ist. Bei der Codierung C handelt es sich um einen QR-Code. Nach dem Einlesen der Codierung C mittels der Datenverarbeitungseinheit werden dem Nutzer N intrinsische Werkzeugdaten D (eine Bauform, eine Funktionsweise und/oder eine Positionierung des zugehörigen Werkzeugs im Werkzeugverbund, Aufspannzeichnungen, Daten zur Steuerung des zugehörigen Werkzeugs, Stücklisten, Datenblätter, eingestellte Parameter des Werkzeugs, Gefährdungsbeurteilungen und/oder Konstruktionszeichnungen, des zugehörigen Werkzeugs und/oder von Komponenten des zugehörigen Werkzeugs) optisch mittels einer Anzeigeeinheit ausgegeben. Eine solchermaßen realisierte Hinterlegung ist weniger fehleranfällig. Durch die Hinterlegung der Codierung C ist es aber nicht möglich, zu prüfen, ob die Standzeit oder ein vorgegebenes Wartungsintervall eingehalten wurde.

Der Zeitschriftenartikel "Werkzeug-Prozessdaten-Protokollierung Flugschreiber fürs Werkzeug" (Eveline Geppert et al., "Werkzeug-Prozessdaten-Protokollierung Flugschreiber fürs Werkzeug", Seiten 78 bis 79, PLASTVERARBEITER 56. Jahrgang (2005) Nr. 4) zeigt einen Schusszähler.

DE 10 2017117397 A1 zeigt ein Messsignalgerät.

GB 2 185 130 A zeigt einen Werkzeughalter mit einem Werkzeugspeicher.

Aufgabe der vorliegenden Erfindung ist es daher, eine Informationsvorrichtung, eine Baugruppe und ein Verfahren jeweils nach der eingangs genannten Art anzugeben, durch die jeweils eine bequeme und zugleich hinsichtlich einer Codierung der Wartungsinformation verbesserte Erfassung bereitgestellt wird.

Die Aufgabe wird durch eine Informationsvorrichtung nach Anspruch 1 gelöst. Vorteilhafte Weiterbildungen sind in den abhängigen Ansprüchen angegeben.

Eine Informationsvorrichtung zur Information über den Wartungszustand eines für eine Bearbeitung eines Werkstücks vorgesehenen Werkzeugs ist zur Erfassung einer Wartungsinformation sowie zur dynamischen Erzeugung eines optisch maschinenlesbaren Codes auf Basis der Wartungsinformation ausgestaltet, wobei die Informationsvorrichtung Anzeigemittel zur Darstellung des optisch maschinenlesbaren Codes umfasst.

Unter der Wartungsinformation ist insbesondere eine Information über eine Betriebsdauer des Werkzeugs oder eines damit kinematisch gekoppelten Objekts, wie eines Werkzeughalters, zu verstehen. Insbesondere entspricht die Betriebsdauer im Wesentlichen oder vollständig einer Kontaktzeit zwischen dem Werkzeug und dem Werkstück. Unter dem Kontakt ist dabei insbesondere der Kontakt einer oder mehrerer Schneidkanten des Werkzeugs mit dem Werkstück bei der Bearbeitung zu verstehen.

Unter der Wartungsinformation ist ferner insbesondere eine Information über eine von dem Werkzeug oder eines damit kinematisch gekoppelten Objekts, wie eines Werkzeughalters, zurückgelegte Strecke zu verstehen, zum Beispiel die Strecke gemäß einer Vorschubbewegung.

Unter der Wartungsinformation ist ferner insbesondere eine Information über eine von dem Werkzeug oder eines damit kinematisch gekoppelten Objekts, wie eines Werkzeughalter, erreichte Anzahl von Umdrehungen um eine Rotationsachse des Werkzeugs und/oder des Objekts zu verstehen, zum Beispiel die Anzahl von Umdrehungen eines Bohrers oder Fräsers während dieser bei der Bearbeitung des Werkstücks mit diesem in Kontakt steht.

Unter der Wartungsinformation ist insbesondere eine Information zu verstehen, die zur Beurteilung geeignet ist, ob ein vorgegebenes Wartungsintervall, zum Beispiel 100 Betriebsstunden, und/oder eine Standzeit, zum Beispiel 150 Betriebsstunden, eingehalten werden bzw. wird.

Die Wartungsinformation ist insbesondere zur Charakterisierung oder Prognose des Ausmaßes einer oder mehrerer Verschleißerscheinungen, insbesondere des Werkzeugs, geeignet. Am einfachsten lässt sich dieses Ausmaß anhand einer Betriebsdauer prognostizieren, insbesondere im Sinne einer vorbeugenden Prognose.

Unter dem Wartungszustand ist insbesondere zu verstehen, inwieweit das Werkzeug gewartet werden muss oder sollte (zum Beispiel: in einem ersten Wartungszustand ist noch keine Wartung des Werkzeugs erforderlich, in einem zweiten Wartungszustand ist hingegen eine Wartung erforderlich), insbesondere vorbeugend vor dem Erreichen einer tatsächlichen oder prognostizieren Standzeit des Werkzeugs.

Unter dem optisch maschinenlesbaren Code ist insbesondere ein Code zu verstehen, welcher zum Interagieren mit einem nach einem optoelektronischen Arbeitsprinzip arbeitenden Lesegerät geeignet ist. Bei einem nach dem optoelektronischen Arbeitsprinzip arbeitenden Lesegerät kann es sich insbesondere um ein mit einer Kamera, zum Beispiel einer Kamera mit einem CCD-Chip oder dergleichen, versehenes Mobiltelefon, ein mit einer Kamera, zum Beispiel einer Kamera mit einem CCD-Chip oder dergleichen, versehenes Tablet oder einen mit einer Kamera, zum Beispiel einer Kamera mit einem CCD-Chip oder dergleichen, versehenen oder mit dieser verbundenen PC handeln. Das Lesegerät kann auch als Ablesegerät bezeichnet werden.

Danach kommen insbesondere mobile Lesegeräte (Mobiltelefon, Tablet, Handscanner oder dergleichen) und stationäre Lesegeräte (PC oder dergleichen) in Betracht. Unter mobil ist insbesondere zu verstehen, dass ein Nutzer das Lesegerät in einer Hand oder zwei Händen bedienen oder tragen kann. Unter mobil ist insbesondere auch zu verstehen, dass ein Nutzer das Lesegerät auf seinem Rücken tragen kann. Unter mobil ist insbesondere auch zu verstehen, dass das Lesegerät in eine Brille, einen Arbeitshelm, einen Handschuh, eine Weste oder ein anderes Bekleidungsstück des Nutzers integriert sein kann.

Die Informationsvorrichtung kann insbesondere mindestens ein stationäres und/oder mindestens ein mobiles Lesegerät umfassen.

Unter einer dynamischen Erzeugung des optisch maschinenlesbaren Codes ist insbesondere zu verstehen, dass dieser Code zum Zeitpunkt der Erzeugung die Wartungsinformation auf Basis des aktuellen Wartungszustands des Werkzeugs codiert (zum Beispiel der zum Zeitpunkt der Erzeugung erreichten Anzahl von Betriebsstunden des Werkzeugs, der zum Zeitpunkt der Erzeugung erreichten Anzahl von Umdrehungen des Werkzeugs um eine vorgegebene Rotationsachse und/oder der zum Zeitpunkt der Erzeugung zurückgelegten Strecke des Werkzeugs). Dies lässt sich auch als Erzeugung des optisch maschinenlesbaren Codes auf Basis aktueller Wartungsinformationen des Werkzeugs beschreiben.

So ist zum Beispiel der zu einem ersten Zeitpunkt erzeugte optisch maschinenlesbare Code von einem zu einem zweiten, späteren Zeitpunkt erzeugten optisch maschinenlesbaren Code verschieden; im ersten Zeitpunkt entspricht der Wartungszustand zum Beispiel 200 Betriebsstunden und im zweiten Zeitpunkt entspricht der Wartungszustand 300 Betriebsstunden, dementsprechend umfasst der optisch maschinenlesbaren Code in dem ersten Zeitpunkt die Wartungsinformation "200 Betriebsstunden" und in dem zweiten Zeitpunkt die Wartungsinformation "300 Betriebsstunden".

Der optisch maschinenlesbare Code basiert auf graphischen Symbolen, die von einem nach dem optoelektronischen Arbeitsprinzip arbeitenden Lesegerät, insbesondere einem mobilen und/oder stationären Lesegerät, derart gelesen bzw. erfasst werden können, dass der optisch maschinenlesbare Code in einen von diesem verschiedenen Code decodiert werden kann. Außerdem kann der optisch maschinenlesbare Code Befehle oder Anweisungen umfassen, die von einem mikroelektronischen Prozessor des nach dem optoelektronischen Arbeitsprinzip arbeitenden Lesegeräts unmittelbar umgesetzt werden können, so zum Beispiel den Befehl "Speichern der Wartungsinformation", "Decodieren der Wartungsinformation", "Darstellen der Wartungsinformation in einem decodierten Format" oder dergleichen. Dadurch wird die Hinterlegung der Wartungsinformation und damit die Wartung des Werkzeugs noch einfacher und zuverlässiger.

Dass der Code optisch maschinenlesbar ist, ist vorteilhaft, weil dadurch eine automatisierte und damit zeitsparende Hinterlegung der Wartungsinformation realisiert werden kann. Außerdem werden durch eine automatisierte Hinterlegung Übertragungsfehler bei der Hinterlegung der Wartungsinformation reduziert.

Der optisch maschinenlesbare Code ist auch unter dem Aspekt vorteilhaft, dass sich mit diesem Code die Menge der dargestellten Wartungsinformationen komprimieren lässt: beispielsweise ursprünglich "10000" Betriebsstunden, im optisch maschinenlesbare Code komprimiert umfasst als 1 x "1", 4 x "0", wobei zur Darstellung von "1" und "0" und der entsprechend vorangestellten Faktoren (1 bzw. 4) jeweils maschinenlesbare graphische Symbole verwendet werden). Danach kann die bereitgestellte, flächenmäßige Dichte der Wartungsinformation durch den optisch maschinenlesbaren Code erhöht werden.

Dass der Code optisch maschinenlesbar lesbar ist, ist darüber hinaus vorteilhaft, weil dadurch bei einer Übertragung der Wartungsinformation an ein Lesegerät, zum Beispiel ein mobiles oder stationäres Lesegerät, die Verwendung bestimmter oder sogar irgendwelcher Funkfrequenzen oder Berücksichtigung bestimmter oder sogar irgendwelcher Vorgaben bezüglich elektromagnetischer Verträglichkeit (EMV) außer Betracht bleiben können. Mit Vorteil entfällt dadurch außerdem die Realisierung einer Funkschnittstelle oder dergleichen bei der Informationsvorrichtung. Dies reduziert den Energieverbrauch der Informationsvorrichtung und macht die Informationsvorrichtung mit einer Vielzahl von Lesegeräten kompatibel.

Die Anzeigemittel können in vorteilhafterweise mindestens ein Anzeigefeld zur graphischen Darstellung des optisch maschinenlesbaren Codes umfassen, zum Beispiel ein Display oder dergleichen, so dass der Code einfach und schnell durch ein Lesegerät oder dergleichen gelesen bzw. erfasst werden kann.

Gemäß einer Weiterbildung der Informationsvorrichtung ist die Wartungsinformation eine Information über eine Betriebsdauer des Werkzeugs, eine Information über eine Anzahl von Umdrehungen des Werkzeugs oder über eine von dem Werkzeug zurückgelegte Strecke. Hierbei handelt es sich in vorteilhafterweise jeweils um eine Wartungsinformation, die zur Überprüfung und/oder Auswertung geeignet ist, ob ein vorgegebenes Wartungsintervall und/oder eine tatsächliche Standzeit und/oder eine prognostizierte Standzeit eingehalten wurde.

Die Erfassung der Wartungsinformation ist durch eine Bewegung des Werkzeugs aktivierbar. Dadurch wird die Wartungsinformation insbesondere dann erfasst, wenn das Werkzeug bewegt wird. Folglich wird die Wartung des Werkzeugs noch weiter automatisiert. Außerdem kann die Erfassung der Wartungsinformation danach erst ab einem bestimmten Betrag einer entsprechenden Bewegungsgröße, zum Beispiel dem Betrag eines entsprechenden Bewegungsvektors aktiviert werden. Dadurch werden Fehler bei der Erfassung der Wartungsinformation reduziert, wie sie zum Beispiel bei einer Drehung oder Beschleunigung des Werkzeugs, also jeweils der Bewegung des Werkzeugs während einer Montage oder eines Testbetriebs bei niedrigeren Drehzahlen bzw. Beschleunigungen auftreten können. Mit anderen Worten, niedrige Drehzahlen, wie sie typischerweise bei der spanabhebenden Bearbeitung eines metallischen Werkstücks auftreten, werden auf diese Weise herausgefiltert und werden demnach nicht von der Wartungsinformation umfasst.

Unter der Bewegung des Werkzeugs ist insbesondere eine Rotation oder eine Translation des Werkzeugs sein. Ergänzend oder alternativ kann die Bewegung auch eine Bewegung eines beliebigen Objekts sein, insbesondere eines mit dem Werkzeug kinematisch gekoppelten Objekts, vorzugsweise eines Werkzeughalters zur Halterung des Werkzeugs.

Der optisch maschinenlesbare Code ist ein Binärcode. Der Binärcode kann schwarze und weiße oder farbige Felder oder eine Kombination aus schwarzen, weißen und farbigen Feldern umfassen. Bei einer Form der Felder kann es sich um Punkte, Kreise, Striche, Quadrate, Rechtecke, Polygone oder dergleichen handeln.

Der Binärcode ist vorzugsweise nach einem bestimmten Codierungsstandard codiert und bildet, wenn dieser durch die Anzeigemittel dargestellt wird bzw. dargestellt ist, ein graphisches Muster. Der Binärcode ist insbesondere für ein nach dem optoelektronischen Arbeitsprinzip arbeitendes Lesegerät besonders einfach erfassbar bzw. lesbar.

Gemäß einer Weiterbildung der Informationsvorrichtung ist der Binärcode ein eindimensionaler Code oder ein zweidimensionaler Code, insbesondere ein QR-Code. Bei diesen Codes handelt es sich um einfach darstellbare und gleichzeitig optisch zuverlässig erfassbare bzw. lesbare Codes.

Unter dem eindimensionalen Binärcode ist insbesondere ein Binärcode zu verstehen, der vor allem, insbesondere nur, in eine Richtung codiert ist. Die Richtung kann beliebig orientiert sein, insbesondere derart, dass sie bezüglich einer Rotationsachse des Werkzeugs als von rechts nach links oder umgekehrt lesbare bzw. erfassbare Zeile zu verstehen ist oder derart, dass sie bezüglich einer Rotationsachse des Werkzeugs als von oben nach unten oder umgekehrt lesbare bzw. erfassbare Spalte zu verstehen ist.

Der eindimensionale Binärcode kann insbesondere strichförmige und/oder balkenförmige Felder umfassen. Der eindimensionale Binärcode wird im Falle strich- oder balkenförmiger Felder typischerweise auch als Strichcode, Balkencode, Streifencode oder Barcode bezeichnet.

Der eindimensionale Binärcode kann nach einem der folgenden Codierungsstandards codiert sein: Australia Post Barcode Codierungsstandard, Codabar Codierungsstandard, Code 25 Codierungsstandard, Code 25 - Interleaved Codierungsstandard, Code 11 Codierungsstandard, Farmacode Codierungsstandard, Code 32 Codierungsstandard, Code 39 Codierungsstandard, Code 49 Codierungsstandard, Code 93 Codierungsstandard, Code 128 Codierungsstandard, CPC Binary Codierungsstandard, DX film edge barcode Codierungsstandard, EAN 2 Codierungsstandard, EAN 5 Codierungsstandard, EAN-8 Codierungsstandard, EAN-13 Codierungsstandard, Facing Identification Mark Codierungsstandard, GS1-128 (d UCC/EAN-128) Codierungsstandard, Codierungsstandard, GS1 DataBar (reduced Space Symbology (RSS)) Codierungsstandard, Intelligent Mail barcode Codierungsstandard, ITF-14 Codierungsstandard, JAN Codierungsstandard, Japan Post barcode Codierungsstandard, KarTrak ACI Codierungsstandard, MSI Codierungsstandard, Pharmacode Codierungsstandard, PLANET Codierungsstandard, Plessey Codierungsstandard, PostBar Codierungsstandard, POSTNET Codierungsstandard, RM4SCC / KIX Codierungsstandard, RM Mailmark C Codierungsstandard, RM Mailmark L Codierungsstandard, Telepen Codierungsstandard oder Universal Product Code Codierungsstandard.

Unter dem zweidimensionalen Binärcode ist insbesondere ein Binärcode zu verstehen, der vor allem in zwei, insbesondere nur, in zwei Richtungen codiert ist. Der zweidimensionale Binärcode kann insbesondere rechteckige oder quadratische Felder umfassen.

Der zweidimensionale Binärcode kann nach einem der folgenden Codierungsstandards codiert sein: AR Code Codierungsstandard, Aztec Code Codierungsstandard, BEEtag Codierungsstandard, BeeTagg Codierungsstandard, Bokode Codierungsstandard, Code 1 Codierungsstandard, Code 16K Codierungsstandard, ColorCode Codierungsstandard, Color Construct Code Codierungsstandard, CrontoSign Codierungsstandard, CyberCode Codierungsstandard, d-touch Codierungsstandard, DataGlyphs Codierungsstandard, Data Matrix Codierungsstandard, Datastrip Code Codierungsstandard, Digimarc Barcode Codierungsstandard, digital paper Codierungsstandard, DotCode Codierungsstandard, Dot Code A Codierungsstandard, DWCode Codierungsstandard, EZcode Codierungsstandard, Han Xin Barcode Codierungsstandard, High Capacity Color Barcode Codierungsstandard, HueCode Codierungsstandard, InterCode Codierungsstandard, JAB-Code Codierungsstandard, MaxiCode Codierungsstandard, mCode Codierungsstandard, MMCC Codierungsstandard, NexCode Codierungsstandard, Nintendo e-Reader#Dot Code Codierungsstandard, PDF417 Codierungsstandard, Qode Codierungsstandard, QR Code Codierungsstandard (Schnellantwortcode- Codierungsstandard, "QR-Code Codierungsstandard"), Semacode Codierungsstandard, Screencode Codierungsstandard, ShotCode Codierungsstandard, Snapcode Codierungsstandard, Boo-R Code Codierungsstandard, Snowflake Code Codierungsstandard, SPARQCode Codierungsstandard, Trillcode Codierungsstandard oder VOICEYE Codierungsstandard.

Der nach dem QR Code Codierungsstandard codierte zweidimensionale Binärcode wird auch als QR-Code bezeichnet. Der QR-Code kann besonders einfach und zuverlässig durch ein mobiles Lesegerät gelesen bzw. erfasst werden, wonach die Zuverlässigkeit der Hinterlegung der Wartungsinformation und damit die Wartung des Werkzeugs insgesamt verbessert wird.

Gemäß einer Weiterbildung der Informationsvorrichtung ist diese zum Empfangen eines ersten Aktvierungssignals ausgestaltet und sind die Anzeigemittel zur Darstellung des optisch maschinenlesbaren Codes auf Basis des ersten Aktivierungssignals ausgestaltet. Die Informationsvorrichtung ist danach insbesondere derart einschaltbar oder aktivierbar ausgestaltet, dass der optisch maschinenlesbare Code erst dann dargestellt wird, wenn dies zum Lesen bzw. zur Erfassung der Wartungsinformation anhand des optisch maschinenlesbaren Codes benötigt wird. Dies spart Energie, ohne dass die Funktion der Informationsvorrichtung beeinträchtigt wird. Vorzugsweise sind insbesondere die Anzeigemittel zum Empfangen des ersten Aktvierungssignals ausgestaltet.

Gemäß einer Weiterbildung der Informationsvorrichtung ist diese zur dynamischen Erzeugung eines menschenlesbaren Codes auf Basis der Wartungsinformation ausgestaltet und sind die Anzeigemittel zur Darstellung des menschenlesbaren Codes ausgestaltet. Die dynamische Erzeugung des menschenlesbaren Codes erfolgt dabei insbesondere analog zu der dynamischen Erzeugung des optisch maschinenlesbaren Codes.

Der menschenlesbare Code kann insbesondere zumindest einen Teil der Wartungsinformation umfassen.

Unter dem menschenlesbaren Code ist insbesondere zu verstehen, dass der Code von einem Menschen unmittelbar lesbar bzw. erfassbar ist. Diese Weiterbildung ist vorteilhaft, weil einerseits durch die Darstellung des optisch maschinenlesbaren Codes die Wartungsinformation einfach, zuverlässig, kompakt hinterlegt werden kann, zum Beispiel in einer Datenbank, und der Nutzer zugleich andererseits anhand der Darstellung des menschenlesbaren Codes unmittelbar darüber informiert werden kann, dass das Werkzeug gewartet werden muss oder dass andere konkrete Maßnahmen ergriffen oder eben nicht ergriffen werden müssen. Der menschenlesbare Code kann danach zum Beispiel Zeichen eines alphanumerischen Codes und/oder unmittelbar verständliche Symbole umfassen.

Der menschenlesbare Code kann parallel, vor oder nach dem optisch maschinenlesbaren Code dynamisch erzeugt werden. Die Anzeigemittel können insbesondere derart ausgestaltet sein, dass der optisch maschinenlesbare Code und der menschenlesbare Code zugleich dargestellt sind, zum Beispiel neben einander oder unter einander.

Gemäß einer Weiterbildung der Informationsvorrichtung ist diese zum Empfangen eines zweiten Aktvierungssignals ausgestaltet und sind die Anzeigemittel zur Darstellung des menschenlesbaren Codes auf Basis des zweiten Aktivierungssignals ausgestaltet. Die Informationsvorrichtung und die Anzeigemittel sind dabei insbesondere analog zu der Weiterbildung der Informationsvorrichtung ausgestaltet, die das Empfangen des ersten Aktivierungssignals betrifft. Die Informationsvorrichtung ist danach insbesondere derart einschaltbar oder aktivierbar ausgestaltet, dass der menschenlesbare Code erst dann dargestellt wird, wenn dies zum Lesen bzw. zur Erfassung zumindest eines Teils der Wartungsinformation anhand des menschenlesbaren Codes benötigt wird. Dies spart Energie, ohne dass die Funktion der Informationsvorrichtung beeinträchtigt wird.

Gemäß einer Weiterbildung der Informationsvorrichtung ist das erste Aktvierungssignal oder das zweite Aktvierungssignal ein magnetisches Signal ist. Diese Weiterbildung ist vorteilhaft, weil durch das magnetische Signal eine berührungslose Aktivierung der Anzeigemittel realisiert wird. Der typischerweise bei einer berührenden Aktivierung der Anzeigemittel ansonsten auftretende Verschleiß wird auf diese Weise reduziert. Besonders vorteilhaft ist es, wenn das erste Aktivierungssignal und das zweite Aktivierungssignal ein magnetisches Signal sind. Das magnetische Signal kann von einem statischen oder dynamischen Magnetfeld eines Magneten stammend sein. Besonders vorteilhaft ist es, wenn das magnetische Signal von einem Stabmagneten bereitgestellt wird. Besonders vorteilhaft ist es, wenn der Stabmagnet in einen vorgegebenen Abstand zu einem Anzeigefeld der Anzeigemittel gebracht wird.

Insbesondere kann das erste Aktivierungssignal oder das zweite Aktivierungssignal ein induktives Signal, ein Signal von einem statischen oder dynamischen Feld stammendes Signal sein.

Gemäß einer Weiterbildung der Informationsvorrichtung ist diese in kompakter Flachbauweise ausgebildet. Dadurch wird ein sehr bauraumvolumensparender Aufbau der Informationsvorrichtung bereitgestellt. Dies ist insbesondere im Falle einer Befestigung der Informationsvorrichtung an dem Werkzeug oder einem Werkzeughalter zur Halterung des Werkzeugs vorteilhaft, weil das Risiko einer Kollision der Informationsvorrichtung mit dem Werkstück verringert wird, dies umso mehr, wenn das Werkzeug ein Zerspanungswerkzeug ist und das Zerspanungswerkzeug bzw. dementsprechend ein entsprechender Werkzeughalter um eine Drehachse bei der Bearbeitung des Werkstücks rotiert.

Die kompakte Flachbauweise kann insbesondere dadurch realisiert werden, dass die Informationsvorrichtung in Schichtbauweise aufgebaut ist, wobei die Anzeigemittel in einer ersten Schicht angeordnet sind und durch die erste Schicht ein Normalenvektor definiert ist und die Informationsvorrichtung mindestens eine zweite Schicht aufweist, welche in Blickrichtung des ersten Normalenvektors mit der ersten Schicht überlappend und zu dieser beabstandet angeordnet ist. In der zweiten, dritten oder weiteren Schicht können weitere Bauteile der Informationsvorrichtung angeordnet sein, zum Beispiel Datenverarbeitungsmittel, Messmittel, eine Platine, insbesondere mit einem Mikrocontroller und einem oder mehreren Sensoren, und/oder ein oder mehrere Energiespeicher, zum Beispiel Batteriezellen, oder dergleichen.

Gemäß einer Weiterbildung der Informationsvorrichtung ist diese in einer Leichtbauweise ausgebildet. Danach wird die Masse der Informationsvorrichtung reduziert, so dass die Befestigung der Informationsvorrichtung an dem Werkzeug oder einem Werkzeughalter zur Halterung des Werkzeugs dahingehend verbessert wird, dass eine Unwucht an dem Werkzeug bzw. dem Werkzeughalter reduziert wird. Die Leichtbauweise kann insbesondere dadurch realisiert werden, dass die Informationsvorrichtung ein Gehäuse umfasst, welches zumindest in einem Gehäuseabschnitt, zum Beispiel einem Gehäusedeckel, einen Faserverbundwerkstoff umfasst, insbesondere einen Glasfaserverbundwerkstoff mit einer Kunststoffmatrix oder einen Kohlefaserverbundwerkstoff mit einer Kunststoffmatrix. Die Anzeigemittel können teilweise oder vollständig in dem Gehäuse angeordnet sind. Das Gehäuse ist insbesondere zur Aufnahme von Messmitteln, einschließlich Sensoren, und/oder Befestigungsmitteln und/oder einer elektronischen Flachbaugruppe, einer Platine, eine Batteriezelle oder dergleichen ausgebildet.

Die Leichtbauweise kann insbesondere dadurch realisiert werden, dass die Informationsvorrichtung ein Gehäuse umfasst, welches zumindest in einem Gehäuseabschnitt, zum Beispiel einem Gehäusedeckel, aus eine Leichtmetalllegierung, wie zum Beispiel eine Aluminiumlegierung oder eine Magnesiumlegierung, umfasst.

Die Informationsvorrichtung umfasst einen Bewegungssensor, insbesondere einen Beschleunigungssensor zur Erfassung der Bewegung, einen aktivierbaren Wartungsinformationssensor, insbesondere einen aktivierbaren Zeitsensor, und Steuermittel, wobei die Steuermittel zum Auswerten der Bewegung sowie zur Bereitstellung eines Aktivierungssignals zur Aktivierung des Wartungsinformationssensors auf Basis des Auswertens der Bewegung ausgestaltet sind. Dadurch wird die Erfassung der Wartungsinformation noch weiter automatisiert und gegenüber dem Auftreten von Fehlern bei der Erfassung verbessert.

So kann zum Beispiel durch den Bewegungssensor eine Änderung der Bewegung im Sinne von "langsamer Bewegung des Werkzeugs" hin zu "schneller Bewegung des Werkzeugs" erfasst werden. Letzteres entspricht typischerweise dem Zustand des Werkzeugs bei der Bearbeitung des Werkstücks, insbesondere im Falle einer spanabhebenden Bearbeitung durch eine Ausgestaltung des Werkzeugs als Zerspanungswerkzeug. Die Steuermittel werten die von dem Bewegungssensor erfassten Messwerte aus, dies ist insbesondere das Auswerten der Bewegung, zum Beispiel durch Vergleichen eines Messwerts (Beschleunigungswert, Geschwindigkeit, Drehzahl) mit einem Aktivierungswert. Ist der Messwert größer als der Aktivierungswert, wird sodann durch die Steuermittel das Aktivierungssignal bereitgestellt. Durch das Aktivierungssignal kann danach der Wartungsinformationssensor aktiviert werden. Folglich wird die Wartungsinformation erst dann erfasst, wenn das Werkzeug in einem tatsächlichen oder zumindest prognostizierten Bearbeitungszustand ist.

Der Aktivierungswert kann betragsmäßig größer Null sein oder der Aktivierungswert kann betragsmäßig gleich Null sein.

Der Wartungsinformationssensor sowie die Steuermittel können in analogerweise derart ausgestaltet sein, dass der Wartungsinformationssensor deaktivierbar ist und die Steuermittel ein Deaktivierungssignal bereitstellen. Dadurch kann die Erfassung der Wartungsinformation beendet werden, wenn das Werkzeug tatsächlich oder prognostiziert in einem von dem Bearbeitungszustand verschiedenen Zustand befindlich ist.

Die Steuermittel können insbesondere in oder auf eine Platine einer elektronischen Baugruppe integriert sein. Danach können die Steuermittel ein oder mehrere elektronische Bauteile wie einen Mikrocontroller umfassen.

Der Beschleunigungssensor kann insbesondere nach einem Messprinzip arbeitend ausgestaltet sein, wobei nach dem Messprinzip eine auf eine Testmasse wirkende Trägheitskraft gemessen wird.

Der Beschleunigungssensor kann insbesondere eine außerhalb ihres Schwerpunkts gelagerte Masse umfassen, wobei erste Elektroden an der Masse und zweite, beabstandet angeordnete Elektroden einen kapazitiven Sensor bilden, um eine zeitabhängige Lageveränderung der Masse zu bestimmen und wobei der Bewegungssensor mindestens ein Federelement an der dem kapazitiven Sensor zugewandten Seite der Masse vorgesehen ist, welches bei Auslenkung der Masse aus ihrer Ruhelage eine Rückstellkraft erzeugt.

Besonders bevorzugt ist der Beschleunigungssensor in oder auf eine Platine einer elektronischen Baugruppe integriert. Danach kann der Beschleunigungssensor auch als mikroelektronisches Bauteil bezeichnet werden.

Bei dem Zeitsensor kann es sich insbesondere um eine Uhr handeln, vorzugsweise eine Funkuhr, eine Quarzuhr oder eine Uhr eines Mikrocontrollers. Vorzugsweise ist der Zeitsensor im Sinne einer Stoppuhr ausgestaltet. Besonders bevorzugt ist der Zeitsensor in oder auf eine Platine einer elektronischen Baugruppe integriert. Danach kann der Zeitsensor ein oder mehrere elektronische Bauteile umfassen.

Durch den Zeitsensor kann besonders einfach die Betriebsdauer des Werkzeugs erfasst werden.

Denkbar und möglich ist es, dass der Wartungsinformationssensor ergänzend oder alternativ zur Erfassung einer Drehzahl des Werkzeugs, einer Geschwindigkeit des Werkzeugs, einer von dem Werkzeug zurückgelegten Strecke, einer auf und/oder durch das Werkzeug ausgeübten Kraft, einer Gestaltsänderung des Werkzeugs, einer elastische Verformung des Werkzeugs, einer plastische Verformung des Werkzeugs oder einer Wechselwirkung zwischen dem Werkzeug und dem Werkzeug ausgestaltet ist. Denkbar und möglich ist, dass der Wartungsinformationssensor als Bewegungssensor ausgestaltet ist.

Gemäß einer Weiterbildung der Informationsvorrichtung umfasst sie Codierungsmittel zur Codierung der Wartungsinformation in den optisch maschinenlesbaren Code. So kann die Wartungsinformation, zum Beispiel eine Betriebsdauerinformation des Werkzeugs, ausgehend von einem ersten Code, wie dieser zum Beispiel nach einer Verarbeitung durch Datenverarbeitungsmittel bereitgestellt wird, in einen zweiten Code codiert werden, wobei der zweite Code der optisch maschinenlesbare Code ist. Hierbei kann einer der eingangs genannten Codierungsstandards verwendet werden. Die Codierungsmittel können insbesondere in einem von den Datenverarbeitungsmittel umfassten Mikrocontroller integriert sein.

Gemäß einer Weiterbildung der Informationsvorrichtung ist diese in einen Energiesparzustand versetzbar. Danach kann die Darstellung des optisch maschinenlesbaren Codes auf eine vorgegebene Anzeigedauer beschränkt werden. Insbesondere kann ein Anzeigefeld der Anzeigemittel ausgeschaltet und/oder in einen Ruhezustand versetzt werden. Die Anzeigedauer kann derart vorgegeben werden, dass der Nutzer ausreichend Zeit hat, den optisch maschinenlesbaren Code mit Hilfe eines mobilen Lesegeräts, zum Beispiel eines Mobiltelefons (Smartphone) mit einer Kamera, zu erfassen und sodann zu speichern. Das Versetzen in den Energiesparzustand spart Energie und verlängert somit die Einsatzzeit der Informationsvorrichtung, insbesondere wenn diese mit einem von ihr umfassten Energiespeicher, zum Beispiel einer Batteriezelle, versehen ist. Die Wartung des Werkzeugs, insbesondere durch die Darstellung des optisch maschinenlesbaren Codes, wird dadurch noch weiter erleichtert, weil der Nutzer den Energiesparzustand nicht manuell herbeiführen muss.

Gemäß einer Weiterbildung der Informationsvorrichtung umfasst diese mindestens einen Energiespeicher zur Energieversorgung. Bei dem Energiespeicher kann es sich insbesondere um einen elektrischen Energiespeicher mit mindestens einer Batteriezelle handeln. Die Batteriezelle kann insbesondere als Knopfbatteriezelle ausgestaltet sein. Der Energiespeicher kann insbesondere zur Energieversorgung mit den Anzeigemitteln, dem Bewegungssensor, den Steuermitteln, dem Wartungsinformationssensor oder dergleichen wirkmäßig verbunden sein. Mit Vorteil müssen daher keine externen Energiespeicher mit der Informationsvorrichtung verbunden werden, so dass die Befestigung der Informationsvorrichtung an dem Werkzeug bzw. einem Werkzeughalter, welcher zur Halterung des Werkzeugs geeignet ist, die Bewegung des Werkzeugs bei der Bearbeitung des Werkstücks nicht behindert. Dies insbesondere dann, wenn die Bewegung eine Rotation um eine Drehachse des Werkzeugs ist. In diesem Fall könnten sich die für die Verbindung mit externen Energiespeichern oder Energiequellen erforderlichen Leitungsmittel wie Stromkabel oder dergleichen um das Werkzeug bzw. den Werkzeughalter wickeln und sodann abreißen, so dass die Informationsvorrichtung nicht mehr mit Energie zum Zwecke einer zuverlässigen und einfachen Wartung des Werkzeugs versorgt werden könnte.

Gemäß einer Weiterbildung der Informationsvorrichtung umfasst diese Überwachungsmittel zur Überwachung eines Speicherzustandes des Energiespeichers. Die Überwachungsmittel können entsprechende Messmittel zur Messung einer für den Speicherzustand des Energiespeichers charakteristischen Größe umfassen. Im Falle eines elektrischen Energiespeichers, wie einer Batteriezelle, ist dies zum Beispiel eine zwischen zwei Polen gemessene elektrische Ruhespannung, welche mit einem Sollspannungswert verglichen wird. Unterschreitet die Ruhespannung die Sollspannung kann durch die Überwachungsmittel ein Warnsignal bereitgestellt werden. Bei dem Warnsignal kann es sich um ein optisches oder akustisches Signal oder eine Kombination hiervon handeln. Im Falle eines optischen Warnsignals bzw. eines optischen Anteils des Warnsignals kann dieses in dem optisch maschinenlesbaren Code und/oder dem menschenlesbaren Code enthalten sein. Alternativ oder ergänzend kann das Warnsignal durch separate Anzeigemittel dargestellt werden, zum Beispiel durch eine Leuchtdiode. Da die Energieversorgung der Informationsvorrichtung zum Zwecke einer zuverlässigen und einfachen Wartung des Werkzeugs wichtig ist, ist dementsprechend eine Überwachung des Speicherzustands des Energiespeichers in gleicherweise wichtig.

Gemäß einer Weiterbildung der Informationsvorrichtung umfassen die Anzeigemittel mindestens ein LCD-Anzeigefeld, ein LED-Anzeigefeld oder ein OLED-Anzeigefeld. Das LCD-Anzeigefelder umfasst Flüssigkristalle, das LED-Anzeigefeld umfasst Leuchtdioden und das OLED-Anzeigefelder organische Leuchtdioden. Durch diese Anzeigefelder kann der optisch maschinenlesbare Code jeweils besonders deutlich dargestellt werden. Außerdem sind diese Anzeigefelder jeweils platzsparend ausgestaltet, so dass sie zu einer kompakten Bauweise der Informationsvorrichtung beitragen. Darüber hinaus können diese Anzeigefelder energiesparend betrieben werden. Ergänzend oder alternativ kommen auch Quantenpunkt-Anzeigefelder in Betracht, mit denen die genannten Vorteile und Eigenschaften ebenfalls realisiert werden können. Das Quantenpunkt-Anzeigefeld umfasst mindestens ein nanokristallines Halbleitermaterial.

Gemäß einer Weiterbildung der Informationsvorrichtung umfasst diese ein Anzeigefeld, welches reversibel biegsam ausgebildet ist. Dadurch kann das Anzeigefeld an eine Außenkontur des Werkzeugs angepasst und auf diese Weise entsprechend befestigt werde. Dies reduziert den Bauraum der Informationsvorrichtung noch weiter und verlagert den Schwerpunkt der Informationsvorrichtung noch weiter an den des Werkzeugs heran, insbesondere in Falle eines Werkzeugs mit einem im Wesentlichen rotationssymmetrischen Abschnitt, so dass eine durch die Informationsvorrichtung erzeugte Unwucht weiter verringert wird.

Gemäß einer Weiterbildung der Informationsvorrichtung umfasst diese das Werkzeug oder einen Werkzeughalter zur Halterung des Werkzeugs, wobei die Anzeigemittel an einem Außenumfang des Werkzeugs beziehungsweise des Werkzeughalters befestigt sind. Bei dem Werkzeug kann es sich um ein Zerspanungswerkzeug, wie zum Beispiel einen Fräser, Bohrer oder dergleichen handeln, insbesondere ein Zerspanungswerkzeug mit einer oder mehreren Schneidkanten. Das Werkzeug oder der Werkzeughalter können jeweils einen rotationssymmetrischen oder zumindest im Wesentlichen rotationssymmetrischen Abschnitt aufweisen, an welchem die Anzeigemittel, direkt oder durch ein Gehäuse, in welches die Anzeigemittel integriert sein können, der Informationsvorrichtung indirekt befestigt sein können. Die Anzeigemittel sind bezüglich des Werkzeugs in axialer Richtung beabstandet. So wird mit Vorteil vermieden, dass das Werkzeug axial aus einer Bearbeitungsposition herausgefahren muss, um den optisch maschinenlesbaren Code abzulesen bzw. zu erfassen. Der rotationssymmetrische Abschnitt weist danach den Außenumfang auf.

Die Aufgabe wird durch eine Baugruppe nach Anspruch 14 gelöst. Vorteilhafte Weiterbildungen sind in dem zu diesem Anspruch abhängigen Ansprüchen angegeben.

Eine Baugruppe umfasst eine Informationsvorrichtung nach einem der beigefügten Ansprüche und mindestens ein Baugruppenelement, wobei das Baugruppenelement ein für eine Bearbeitung eines Werkstücks vorgesehenes Werkzeug oder ein Werkzeughalter zur Halterung des Werkzeugs ist und die Informationsvorrichtung an dem Werkzeug oder dem Werkzeughalter befestigt ist. Hierbei handelt es sich um eine besonders zweckmäßige Maßnahme, weil durch die Informationsvorrichtung eine vorteilhafte Wartung des Werkzeugs bereitgestellt wird, sei es, weil sie an dem Werkzeug befestigt ist, oder sei es, weil sie an dem Werkzeughalter befestigt ist.

Das Werkzeug kann mit dem Werkzeughalter derart wirkmäßig verbunden sein, dass das Werkzeug und der Werkzeughalter eine gemeinsame Bewegung, insbesondere eine Rotation um eine gemeinsame Rotationsachse ausführend sind, wenn das Werkzeug oder der Werkzeughalter in einem angetriebenen Zustand befindlich ist.

Vorzugsweise ist die Informationsvorrichtung reversibel lösbar befestigt. Darunter ist insbesondere zu verstehen, dass die Informationsvorrichtung hinsichtlich des Werkzeugs, des Werkzeughalters und sich selbst gegenüber im Wesentlichen, vorzugsweise vollständig, zerstörungsfrei befestigt werden kann. Dies kann durch entsprechende kraftschlüssig und/oder formschlüssig wirkende Befestigungsmittel realisiert werden, welche von der Baugruppe vorzugsweise umfasst sind. Die Befestigungsmittel können insbesondere Schraubenelemente und/oder Spannelement umfassen. Die Befestigungsmittel sind insbesondere derart ausgestaltet, dass die Informationsvorrichtung gegen eine radiale Bewegung gesichert ist.

Alternativ oder ergänzend kann die Informationsvorrichtung auch durch eine Klebeverbindung befestigt sein oder werden.

Gemäß einer Weiterbildung der Baugruppe ist die Informationsvorrichtung an einem Außenumfang des Werkzeugs oder des Werkzeughalters befestigt. Dadurch kann eine Bewegung des Außenumfangs und damit des Werkzeugs bzw. des Werkzeughalters derart verwendet werden, dass ein von der Informationsvorrichtung umfasster Beschleunigungssensor ein Aktivierungssignal zur Aktivierung eines aktivierbaren Wartungsinformationssensor aufgrund dieser Bewegung bereitstellt. Dementsprechend kann die Wartungsinformation erst dann erfasst werden, wenn das Werkzeug bzw. der Werkzeughalter bewegt wird.

Bei einem Verfahren zum Informieren über den Wartungszustand eines für eine Bearbeitung eines Werkstücks vorgesehenen Werkzeugs werden zumindest die folgenden Verfahrensschritte durchgeführt: Schritt a. Bereitstellen des Werkzeugs; Schritt b. Bewegen des Werkzeugs; Schritt c. Beenden von Schritt b; Schritt d. dynamisches Erzeugen eines mindestens eine Wartungsinformation des Werkzeugs umfassenden optisch maschinenlesbaren Codes vor Schritt c, in Schritt c oder nach Schritt c; Schritt e. Darstellen des optisch maschinenlesbaren Codes; Schritt f. Beurteilen auf Basis von Schritt e, ob ein vorgegebenes Wartungsintervall des Werkzeugs oder eine vorgegebene Standzeit des Werkzeugs erreicht wurde.

Durch dieses Verfahren lässt sich das Werkzeug besonders einfach und zuverlässig warten, weil der optisch maschinenlesbare Code auf dem aktuellen Wartungszustand des Werkzeugs basiert und dieser Code durch ein mobiles Lesegerät gelesen bzw. erfasst werden kann, ohne dass ein Nutzer die Wartungsinformation manuell hinterlegen muss.

In Schritt a kann ein Zerspanungswerkzeug bereitgestellt werden, welches vorzugsweise von einem Werkzeughalter gehalten wird. Das Bewegen des Werkzeugs in Schritt b kann insbesondere zur Bearbeitung des Werkstücks durchgeführt werden, insbesondere kann es sich um eine Drehung des Werkzeugs um eine Rotationsachse handeln. Das Beenden in Schritt c kann entweder automatisiert oder manuell erfolgen, zum Beispiel nachdem ein vorgegebener Bearbeitungsschritt beendet ist. Das dynamische Erzeugen des mindestens eine Wartungsinformation umfassenden optisch maschinenlesbaren Codes erfolgt analog zu den hier offenbarten Ausführungsformen der Informationsvorrichtung. Für das Darstellen des optisch maschinenlesbaren Codes in Schritt e können die Anzeigemittel nach den hier offenbarten Ausführungsformen der Informationsvorrichtung verwendet werden. Für das Beurteilen in Schritt f kann zum Beispiel eines der hier offenbarten Lesegeräte verwendet werden, wonach der optisch maschinenlesbare Code lokal in dem Lesegerät ausgewertet wird und/oder an ein externe Datenverarbeitungsmittel zur Auswertung gesendet wird.

Gemäß einer Weiterbildung des Verfahrens wird, wenn ein Messwert einer Bewegungsgröße des Werkzeugs in Schritt b einen kritischen Wert überschreitet, die Wartungsinformation ermittelt. Dadurch wird eine automatisierte Überwachung des Wartungszustands des Werkzeugs bereitgestellt, weil die Erfassung der Messdaten erst durch eine Änderung der Bewegungsgröße, also insbesondere intrinsisch, aktiviert wird. Außerdem kann bei geeigneter Wahl des kritischen Werts die Erfassung der Messdaten erst dann aktiviert werden, wenn das Werkzeug eine für die Bearbeitung des Werkstücks relevante Bewegung ausführt, zum Beispiel eine Drehung um eine Drehachse mit einer bestimmten relativ hohen Drehzahl.

Unter der Bewegung des Werkzeugs ist insbesondere eine Rotation oder eine Translation des Werkzeugs zu verstehen. Ergänzend oder alternativ kann die Bewegung auch eine Bewegung eines beliebigen Objekts sein, insbesondere eines mit dem Werkzeug kinematisch gekoppelten Objekts, vorzugsweise eines Werkzeughalters zur Halterung des Werkzeugs.

Gemäß einer Weiterbildung des Verfahrens umfasst die Wartungsinformation eine Information über eine Betriebsdauer des Werkzeugs, eine Information über eine Anzahl von Umdrehungen des Werkzeugs oder eine Information über eine von dem Werkzeug zurückgelegte Strecke.

Gemäß einer Weiterbildung des Verfahrens wird in Schritt f zumindest ein Teil des optisch maschinenlesbaren Codes in einen menschenlesbaren Code decodiert. Dadurch kann der Nutzer unter Wahrung des Vorteils, dass die Wartungsinformation durch den optisch maschinenlesbaren Code, welcher auf dem aktuellen Wartungszustand des Werkzeugs basiert, einfach und zuverlässig hinterlegt werden kann, unmittelbar erkennen, ob ein Wartungsintervall und/oder eine prognostizierte Standzeit und/oder eine tatsächliche Standzeit des Werkzeugs erreicht wurde. Der menschenlesbare Code kann insbesondere auf alphanumerischen Symbolen basieren. Für den optisch maschinenlesbaren Code kommt ein nach den hier offenbarten Codierungsstandards codierter Code in Betracht, insbesondere ein QR-Code.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung einer Informationsvorrichtung gemäß einer Ausführungsform in Draufsicht auf eine Vorderseite der Informationsvorrichtung;
- Fig. 2:: eine schematische Darstellung der Informationsvorrichtung nach Fig. 1 in Blickrichtung des Pfeils II aus Fig. 1;
- Fig. 3:: eine schematische Darstellung der Informationsvorrichtung nach Fig. 2 in Blickrichtung des Pfeils III aus Fig. 2;
- Fig. 4:: eine schematische Darstellung der Informationsvorrichtung nach Fig. 2 ohne Gehäuse und Dichtring in Blickrichtung des Pfeils IV aus Fig. 2
- Fig. 5:: eine schematische Darstellung der Informationsvorrichtung nach Fig. 1 in Blickrichtung des Pfeils V aus Fig. 1;
- Fig. 6:: eine schematische Darstellung der Informationsvorrichtung nach Fig. 5 ohne Gehäuse und Dichtring in Blickrichtung in Blickrichtung des Pfeils VI aus Fig. 5;
- Fig. 7:: eine schematische Darstellung der Informationsvorrichtung gemäß Fig. 1 mit optisch maschinenlesbarem Code einer Betriebsdauerinformation;
- Fig. 8:: eine schematische Darstellung der Informationsvorrichtung gemäß Fig. 1 mit optisch menschenlesbarem Code einer Betriebsdauerinformation;
- Fig. 9:: eine schematische Darstellung der Informationsvorrichtung gemäß Fig. 1 mit deaktiviertem Display;
- Fig. 10:: eine schematische Darstellung der Informationsvorrichtung nach Fig. 1 und eines Werkzeughalters in perspektivischer Ansicht von schräg oben links;
- Fig. 11:: eine schematische Darstellung der Informationsvorrichtung und des Werkzeughalters nach Fig. 10 in Blickrichtung auf die Informationsvorrichtung gemäß Fig. 1 mit optisch maschinenlesbarem Code einer Betriebsdauerinformation;
- Fig. 12:: eine schematische Darstellung der Informationsvorrichtung und des Werkzeughalters nach Fig. 10 in Blickrichtung auf die Informationsvorrichtung gemäß Fig. 1 mit optisch maschinenlesbarem Code einer Betriebsdauerinformation;
- Fig. 13:: eine schematische Darstellung der Informationsvorrichtung und des Werkzeughalters nach Fig. 10 in Blickrichtung auf die Informationsvorrichtung gemäß Fig. 1 mit optisch maschinenlesbarem Code einer Betriebsdauerinformation;
- Fig. 14:: eine schematische Darstellung der Informationsvorrichtung und des Werkzeughalters gemäß Fig. 11 sowie eines Stabmagneten und eines Smartphones.

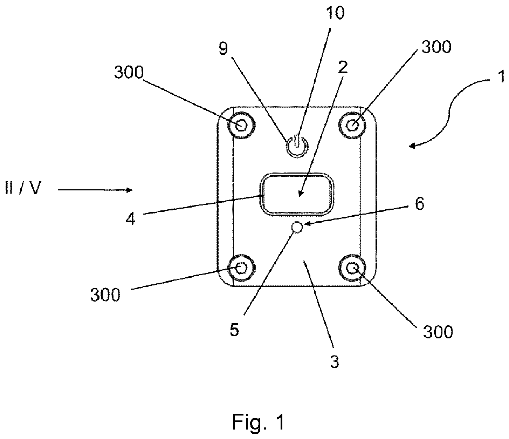

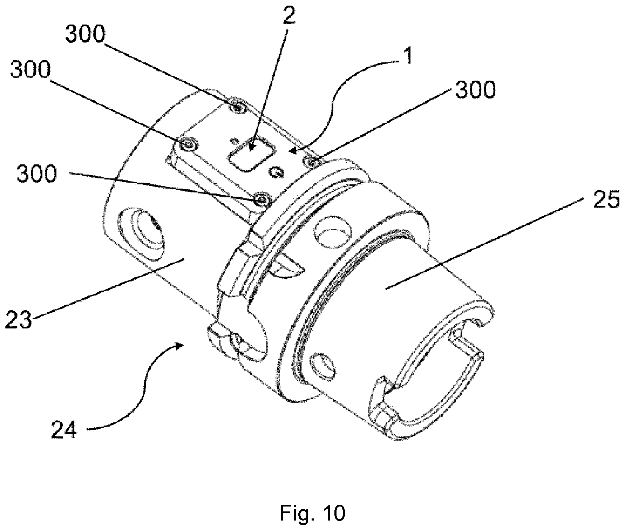

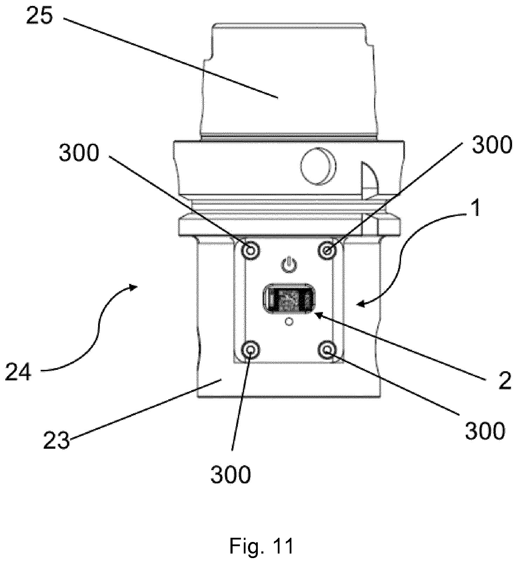

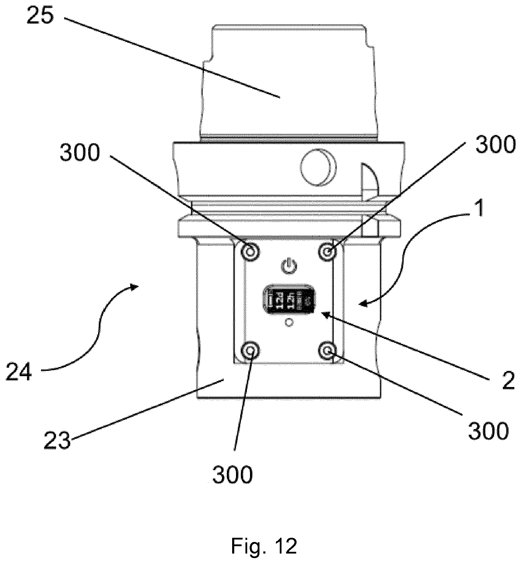

Eine Ausführungsform einer Informationsvorrichtung 1 wird im Folgenden unter Bezugnahme auf die Fig 1 bis Fig. 14 eingehender beschrieben. In den Fig. 1 bis Fig. 9 wird die Informationsvorrichtung 1 in Alleinstellung und in den Fig. 10 bis Fig. 14 in Kombination mit einem schematisch dargestellten Werkzeughalter 24 schematisch dargestellt.

In Fig. 1 ist besonders gut ersichtlich, dass die Informationsvorrichtung 1 ein Display 2, welches als OLED-Display ausgestaltet ist, umfasst. Auf dem Display 2 kann eine Betriebsdauerinformation eines Zerspanungswerkzeugs und/oder andere Wartungsinformationen des Zerspanungswerkzeugs und/oder eine für den Betrieb der Informationsvorrichtung charakteristische Information dargestellt werden, so dass jeweils diese Informationen abgelesen bzw. erfasst werden können.

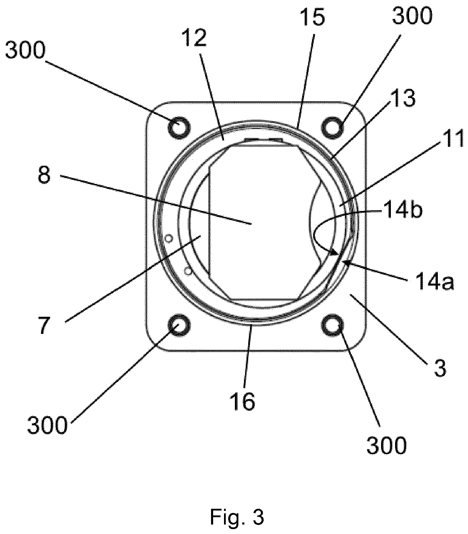

Die Informationsvorrichtung 1 umfasst ferner ein Gehäuse 3, dessen Vorderseite aus Fig. 1 und dessen Rückseite aus Fig. 3 jeweils besonders gut ersichtlich sind. Das Gehäuse 3 ist aus einem Kohlefaserverbundwerkstoff hergestellt. Denkbar und möglich sind aber auch andere Materialien, insbesondere Aluminiumlegierungen oder Magnesiumlegierungen. Das Gehäuse 3 kann durch Schrauben 300 reversibel lösbar mit einem Werkzeughalter in radialer Richtung bezüglich einer Rotationsachse des Werkzeughalters verbunden werden. Außengewinde der Schrauben 300 greifen in einem solchermaßen montierten Zustand der Informationsvorrichtung 1 in korrespondierende Innengewinde eines Werkzeughalters ein.

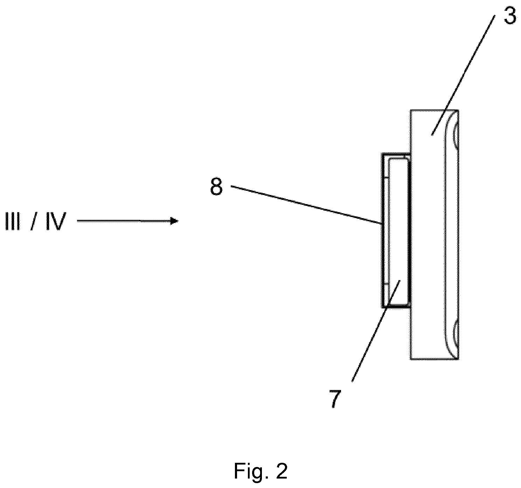

Das Gehäuse 3 weist eine Öffnung 4 auf, in welcher das Display 2 bündig angeordnet ist. Das Gehäuse 3 weist außerdem eine Öffnung 5 auf, in welcher eine Leuchtdiode 6 (LED) bündig angeordnet ist. Die Leuchtdiode 6 sendet ein erstes farbiges Lichtsignal, wenn eine Ruhespannung einer Knopfbatteriezelle 7, welche zum Beispiel in den Fig. 2 und Fig. 3 schematisch dargestellt ist, der Informationsvorrichtung 1 eine vorgegebene Ruhespannung unterschreitet, also wenn der Speicherzustand der Knopfbatteriezelle 7 derart niedrig ist, dass diese ausgetauscht oder aufgeladen werden müsste. Die Leuchtdiode 6 sendet ein zweites, von dem ersten Lichtsignal verschiedenes farbiges Lichtsignal, wenn ein vorgegebenes Serviceintervall, also eine vorgegebene Betriebsdauer eines Werkzeugs, welchem die Informationsvorrichtung 1 funktionell zugeordnet ist, erreicht wurde.

Durch die Knopfbatteriezelle 7 wird die Informationsvorrichtung 1 mit elektrischer Energie versorgt, so dass diese eine Betriebsdauerinformation eines Werkzeugs auf Basis einer Rotation eines Werkzeughalters erfassen und auf dem Display 2 anzeigen kann. Aus einer Zusammenschau der Fig. 2 und Fig. 3 ist besonders gut ersichtlich, dass die Knopfbatteriezelle 7 durch eine Spannvorrichtung 8, welche auch als Batteriefach bezeichnet werden kann, gegen eine Platine 12 der Informationsvorrichtung 1 elastisch vorgespannt wird. Auf diese Weise wird ein elektrischer Kontakt zwischen der Knopfbatteriezelle 7 und der Platine 12 bereitgestellt. Die Platine 12 umfasst dabei für den Betrieb der Informationsvorrichtung 1 benötigte elektronische Bauteile, so dass durch die Informationsvorrichtung 1 eine Betriebsdauerinformation eines Zerspanungswerkzeugs auf Basis einer Rotation eines Werkzeughalters erfasst und durch das Display 2 bedarfsweise dargestellt werden kann.

Bezugnehmend auf Fig. 1 weist das Gehäuse 3 Beschriftungssymbole 9 und 10 auf, welche im Sinne eines für einen Nutzer der Informationsvorrichtung 1 leicht verständlichen Einschalt-/Ausschalt-Symbols ausgeformt sind. Durch die Beschriftungssymbole 9 und 10 wird eine Stelle gekennzeichnet, auf welche ein Magnetstift oder dergleichen gerichtet oder an welcher dieser vorbeibewegt werden müsste, um das Display 2 zur Darstellung von Wartungsinformationen, insbesondere eine Betriebsdauerinformation, berührungslos aktivieren zu können. Die Beschriftungssymbole 9 und 10 lassen sich mithilfe eines Lasers oder dergleichen auf dem Gehäuse 3 erzeugen.

Aus Fig. 3 ist besonders gut ersichtlich, dass die Knopfbatteriezelle 7 tangential umschließend von einem Dichtring 11 umgeben ist. Der Dichtring 11 ist radial gegen die Knopfbatteriezelle 7 vorgespannt, so dass die Knopfbatteriezelle 7 im Bereich eines Batteriepoles gegen das Eindringen von Verschmutzungen und Feuchtigkeit an einem Übergang zu der Platine 12 geschützt ist. Außerdem wird die Knopfbatteriezelle 7 durch den Dichtring 11 radial gegen Translationsbewegungen gesichert.

Aus Fig. 3 ist ferner ersichtlich, dass die Platine 12 in einer Bohrung 13 des Gehäuses 3 angeordnet ist.

Die Bohrung 13 ist bis auf einen linearen Abschnitt 14a kreisförmig. Der Abschnitt 14a ist korrespondierend zu einem linearen Abschnitt 14b der Platine 12 ausgebildet, so dass die Platine 12 gegenüber einer Drehung um einen Normalenvektor bezüglich der Platine 12 verdrehgesichert in der Bohrung 13 gelagert ist.

Das Gehäuse 3 weist ferner eine Bohrung 15 auf. Der Durchmesser der Bohrung 15 ist - wie aus Fig. 3 ersichtlich ist - größer als der Durchmesser der Bohrung 13. Die Tiefe der Bohrung 15 ist kleiner als die Tiefe der Bohrung 13, so dass auf diese Weise eine nutförmige Stufe zwischen der Bohrung 13 und der Bohrung 15 gebildet wird. In dieser Stufe ist ein Dichtring 16 angeordnet. Wird das Gehäuse 3 mit einem Werkzeughalter verschraubt, wird durch den Dichtring 16 ein Spalt zwischen einem Werkzeughalter und dem Gehäuse 3 abgedichtet, so dass insbesondere die Platine 12 vor dem Eindringen von Verschmutzungen und Feuchtigkeit geschützt wird.

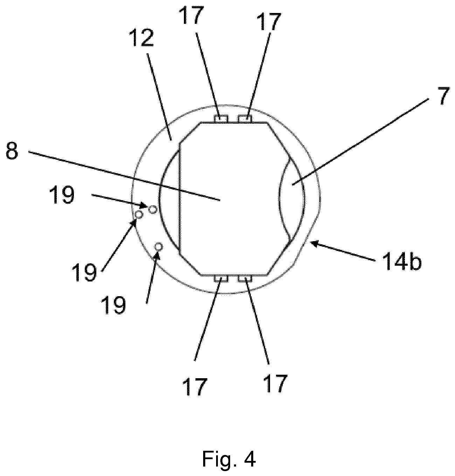

In den Fig. 4 bis Fig. 6 ist die Platine 12 ohne Gehäuse 3 und Dichtring 11 schematisch dargestellt.

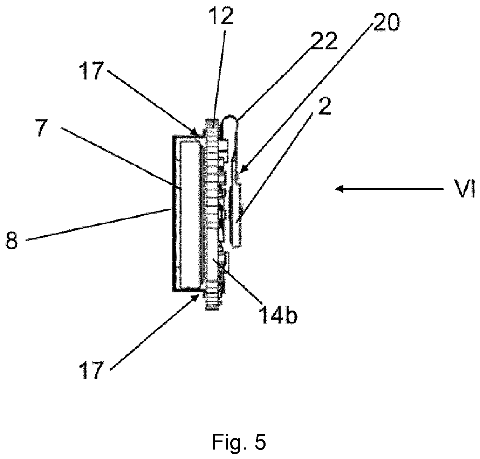

In den Fig. 4 und Fig. 5 ist besonders gut ersichtlich, dass die Spannvorrichtung 8 mittels vier Bügelelemente 17 an der Platine 12 befestigt ist. Aus Fig. 5 ist besonders gut ersichtlich, dass das Display 2 mittels eines Datenkabels 22 mit der Platine 12 zum Empfang und zur Darstellung einer Betriebsdauerinformation eines Zerspanungswerkzeugs und für den Betrieb der Informationsvorrichtung 1 charakteristischer Informationen verbunden ist.

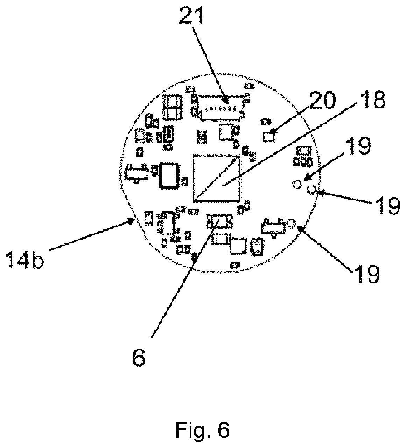

Der schematischen Darstellung der Platine 12 in Fig. 6 ist zu entnehmen, dass die Platine 12 einen Mikrocontroller 18 umfasst, wobei der Mikrocontroller 18 mit der Platine und anderen von der Platine umfassten mikroelektronischen Bauteilen datenkommunizierend verbunden ist. Der Mikrocontroller 18 kann auch als Ein-Chip-Computer-System bezeichnet werden.

Der Mikrocontroller 18 wird über einen externen Computer oder dergleichen programmiert, indem mit dem externen Computer eine Datenverbindung dergestalt eingerichtet wird, dass in Bohrungen 19 der Platine 12 entsprechende Stifte eines Programmieradapters gesteckt werden. Die entsprechende Datenschnittstelle ist auf der Platine 12 zwischen den Bohrungen 19 ausgebildet. Der Mikrocontroller 18 umfasst eine Uhr oder ist einem Bereich als solche ausgebildet, um eine Betriebsdauerinformation eines Zerspanungswerkzeugs zu erfassen, insbesondere eine Zeit, ein Zeitintervall oder mehrere Zeitintervalle. Die Uhr wird im Sinne einer Stoppuhr wie folgt aktiviert.

Wenn ein Beschleunigungssensor 20 in Form eines mikroelektronischen Bauteils der Platine 12 eine Drehbeschleunigung eines Zerspannungswerkzeugs erfasst, wird ein entsprechendes Beschleunigungssignal an den Mikrocontroller 18 gesendet. In dem Mikrocontroller 18 wird ein der Beschleunigung entsprechender Betrag der Beschleunigung berechnet. Dieser berechnete Betrag wird mit einem in einem Speicher des Mikrocontrollers 18 durch Programmieren hinterlegten Sollwert verglichen. Ist der berechnete Betrag größer als der Sollwert, wird die Uhr des Mikrocontrollers zur Messung einer Betriebsdauer des Zerspanungswerkzeugs aktiviert oder eine bereits dementsprechend aktivierte Zeitmessung fortgesetzt. Wenn der berechnete Betrag kleiner als der Sollwert ist, wird die Uhr des Mikrocontrollers 18 nicht aktiviert oder eine bereits aktivierte Zeitmessung durch Deaktivieren der Uhr beendet. Die durch die Uhr gemessenen Zeitinformationen werden in einem Speicher des Mikrocontrollers 18 gespeichert. Der Mikrocontroller 18 ist dazu eingerichtet, die Zeitinformationen in einen QR-Code zu codieren.

Wenn eine auf diese Weise durchgeführte Zeitmessung beendet ist, wird die gemessene Betriebsdauer im Falle einer Abfrage durch einen Nutzer mittels in einem Speicher des Mikrocontrollers 18 hinterlegter Befehle in eine Betriebsdauerinformation, also eine Wartungsinformation, als nach einem Codierungsstandard codiertes Datensignal an einen Displayanschluss 21 der Platine 12 gesendet, so dass über das mit dem Displayanschluss 21 verbundene Datenkabel 22 (siehe hierzu insbesondere Fig. 5) die codierte Betriebsdauerinformation an das Display 2 gesendet und wahlweise dort dargestellt wird.

Diese so dargestellte Wartungsinformation basiert auf einem aktuellen Wartungszustand eines Zerspanungswerkzeugs. Ein hierfür bevorzugter Codierungsstandard ist der QR-Code-Codierungsstandard und optional ergänzend ein auf alphanumerischen Symbolen basierender, also durch den Nutzer unmittelbar lesbarer, Code.

Der Mikrocontroller 18 ist auch dazu eingerichtet, dass die Betriebsdauerinformation je nach dem Zeitpunkt der Abfrage basierend auf mehreren abgespeicherten, zuvor gemessenen Betriebsdauerinformationen integriert wird, bevor die Codierung und die anschließende Darstellung auf dem Display 2 stattfinden.

Die Darstellung der Betriebsdauerinformation, optional weiterer Wartungsinformationen und optional für den Betrieb der Informationsvorrichtung charakteristischer Informationen auf dem Display 2 wird dadurch realisiert, dass die Platine 12 zum Empfang eines magnetischen Signals ausgestaltet ist, woraufhin das Display 2 zur Darstellung der Betriebsdauerinformation aktiviert wird. Denkbar und möglich ist es auch, dass nur das Display 2 zum Empfang des magnetischen Signals ausgestaltet ist, woraufhin das Display 2 dementsprechend schaltbar ausgestaltet ist.

Dementsprechend können die Codierung und die Darstellung der Wartungsinformation beendet werden, wenn ein zweites magnetisches Signal von der Platine 12 empfangen wird.

Der Mikrocontroller ist auch dazu eingerichtet, auf Basis eines gemessenen elektrischen Spannungssignals der Knopfbatteriezelle 7 den Batterieladestatus durch einen Vergleich mit einem Referenzspannungswert zu berechnen und eine entsprechende Batterieladestatusinformation über das Datenkabel 22 an das Display 2 in codierter Form, insbesondere mit einem Batteriesymbol und alphanumerischen Prozentangabesymbolen, zur dortigen Darstellung zu senden.

Der Mikrocontroller 18 ist auch zu eingerichtet, dass wenn die Ruhespannung der Knopfbatteriezelle 7 (Batteriestatus) kleiner als 2,5 V ist, die Betriebsdauerinformation gespeichert bleibt, so dass diese Information nach einem Austausch der Knopfbatteriezelle 7 durch das Display 2 abgelesen werden kann.

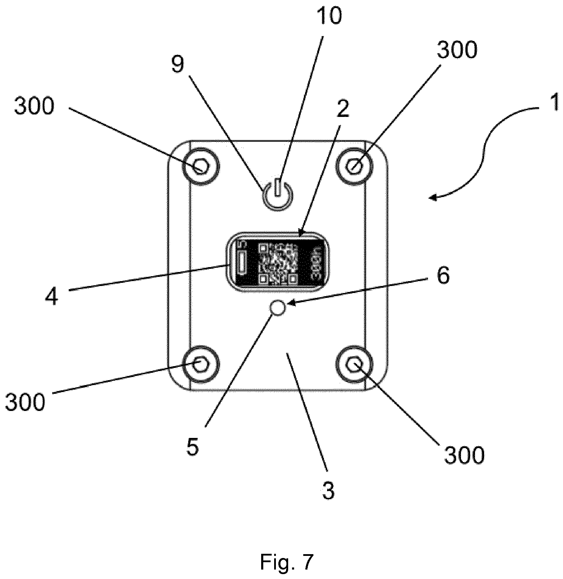

Aus Fig. 7 ist ersichtlich, dass eine Betriebsdauerinformation und weitere exemplarische Informationen auf dem Display 2 als QR-Code dargestellt werden und dass neben dem QR-Code auf dem Display 2 der Batteriestatus der Knopfbatteriezelle 7 durch ein Batteriesymbol und eine Zahl dargestellt wird. Außerdem wird neben dem QR-Code die Betriebsdauerinformation "300 h" (300 Stunden) als alphanumerischer Code zur unmittelbaren Erfassung durch einen Nutzer auf dem Display 2 dargestellt. Dies kann auch als "maschinenlesbarer Anzeigestatus" der Informationsvorrichtung 1 bezeichnet werden.

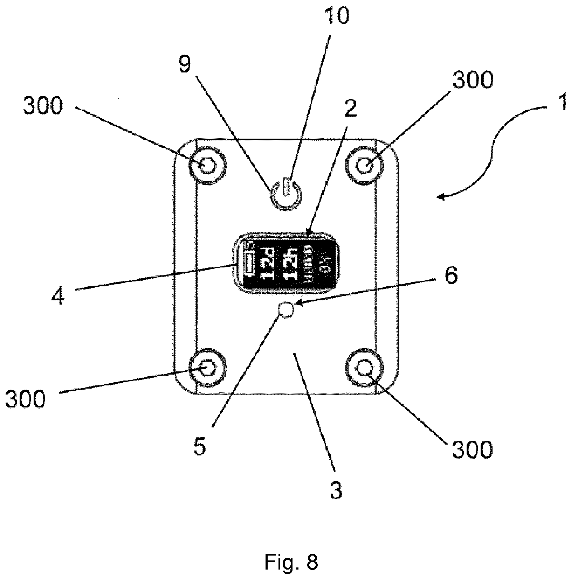

Aus Fig. 8 ist ersichtlich, dass die Betriebsdauerinformation gemäß dem QR-Code auf dem Display 2 nach Fig. 8 als alphanumerischer Code dargestellt wird. Dies kann auch als "menschenlesbarer Anzeigestatus" der Informationsvorrichtung 1 bezeichnet werden.

Zwischen dem maschinenlesbaren Anzeigestatus der Informationsvorrichtung 1 und dem menschenlesbaren Anzeigestatus der Informationsvorrichtung 1 kann beliebig gewechselt werden. Der Mikrocontroller 18 ist hierfür entsprechend eingerichtet.

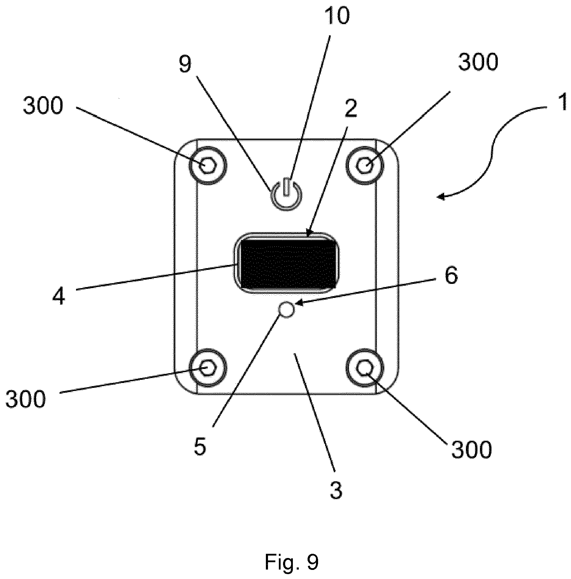

Aus Fig. 9 ist ersichtlich, dass das Display 2 ausgeschaltet werden kann, wonach keine Informationen auf dem Display 2 angezeigt werden. Dies kann auch als "Ruhezustand" der Informationsvorrichtung 1 bezeichnet werden. In dem Ruhezustand wird besonders wenig chemische Energie der Knopfbatteriezelle 7 in elektrische Energie zur Energieversorgung der Informationsvorrichtung 1 umgewandelt. Der Mikrocontroller 18 ist dazu eingerichtet, dass ein Übergang von dem maschinenlesbaren Anzeigestatus oder dem menschenlesbaren Anzeigestatus in den Ruhezustand nach dem Verstreichen einer vorgegebenen Zeit automatisch erfolgt.

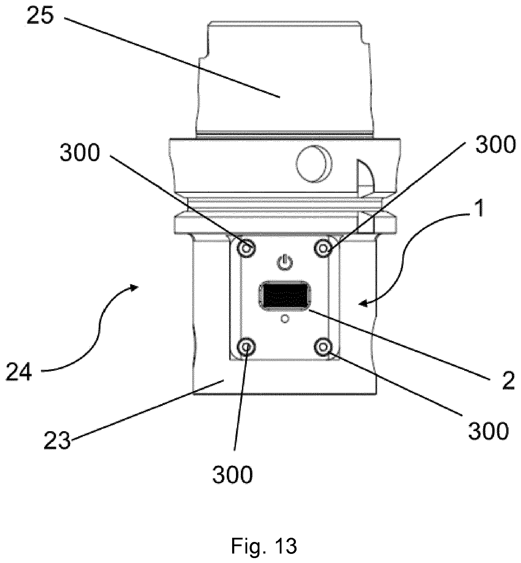

In den Fig. 10 bis Fig. 14 wird ein montierter Zustand der Informationsvorrichtung 1 schematisch dargestellt. Die Informationsvorrichtung 1 ist an einem zur Aufnahme eines hier nicht dargestellten Aussteuerwerkzeugs vorgesehenen zylindrischen Aufnahmeabschnitt 23 eines Werkzeughalters 24 mittels der Schrauben 300 befestigt. Das Aussteuerwerkzeug ist mit einer hier nicht dargestellten Werkzeugmaschine über einen Verbindungsabschnitt 25 des Werkzeughalters 24 gekoppelt. Die Werkzeugmaschine versetzt den Werkzeughalter 24 und damit das Aussteuerwerkzeug in Rotation, wenn die Werkzeugmaschine angetrieben wird. Durch den Beschleunigungssensor 20, welcher in Fig. 6 besonders gut ersichtlich ist, der Informationsvorrichtung 1 wird diese Rotation erfasst und ein entsprechendes Beschleunigungssignal an den Mikrocontroller 18, welcher in Fig. 6 besonders gut ersichtlich ist, der Informationsvorrichtung 1 gesendet. Basierend hierauf wird eine Zeitmessung mittels einer in den Mikrocontroller 18 integriert Uhr aktiviert, wenn die Beschleunigung einen Referenzwert überschreitet. In analogerweise wird die Zeitmessung beendet, wenn die Beschleunigung den Referenzwert unterschreitet. Der Mikrocontroller 18 codiert die durch eine solche Zeitmessung ermittelte Betriebsdauerinformation zur Darstellung auf dem Display 2 wahlweise in einen QR-Code (maschinenlesbarer Code), wie dies aus Fig, 11 ersichtlich ist, oder einen alphanumerischen Code (menschenlesbarer Code), wie dies aus Fig, 12 ersichtlich ist. Außerdem kann das Display 2 in einen ausgeschalteten Zustand (Ruhezustand) nach dem Verstreichen einer vorgegebenen Anzeigedauer versetzt werden, wie dies aus Fig. 13 ersichtlich ist. Das Ausschalten des Display 2 wird durch den Mikrocontroller 18 gesteuert.

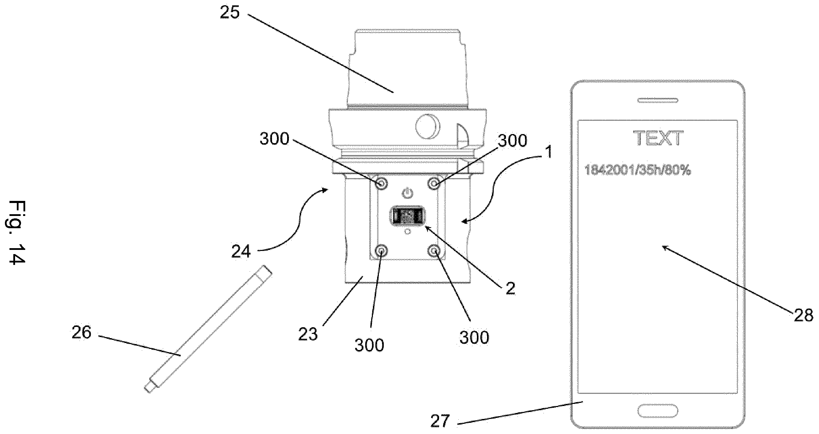

Aus Fig. 14 ist ersichtlich, wie der auf dem Display 2 dargestellte QR-Code durch einen Benutzer erfasst und sodann dekodiert werden kann, um auf diese Weise eine Betriebsdauerinformation des Aussteuerwerkzeugs zu erfassen und zu dokumentieren. Hierzu wird ein Stabmagnet 26 in die Nähe, etwa 10 mm oder weniger in Richtung senkrecht auf das Display 2, des Displays 2 gebracht, woraufhin ein durch elektronische Bauteile auf der Platine 12, welche in Fig. 6 besonders gut ersichtlich sind, bereitgestellter Schaltmechanismus aktiviert wird, so dass der QR-Code auf dem Display 2 dargestellt wird. Der QR-Code wird mithilfe eines Smartphones 27 eingescannt und in einen alphanumerischen Code decodiert, welcher auf dem Display 28 des Smartphones 27 dargestellt wird. Anstelle des Smartphones 27 kann auch ein Scanner, Tablet oder Ähnliches verwendet werden.

Auf dem Display 28 wird ein exemplarisch decodierter QR-Code dargestellt, wonach neben einer Betriebsdauer von 35 h auch eine für den Betrieb der Informationsvorrichtung 1 charakteristische Information decodiert wurde, nämlich dass die Ladekapazität der Knopfbatteriezelle 7, welche in Fig. 2 besonders gut ersichtlich, 80 % beträgt. Außerdem enthält der decodierte Code die Informationen "Text" "1842001". Diese Informationen stehen exemplarisch für weitere Informationen, die durch die Informationsvorrichtung 1 erfasst oder in dieser abgespeichert sind und sodann in einen QR-Code codiert werden können.

## Patentansprüche

1. Informationsvorrichtung (1) zur Information über den Wartungszustand eines für eine Bearbeitung eines Werkstücks vorgesehenen Werkzeugs, wobei die Informationsvorrichtung (1) zur Erfassung einer Wartungsinformation sowie zur dynamischen Erzeugung eines optisch maschinenlesbaren Codes auf Basis der Wartungsinformation ausgestaltet ist, wobei die Informationsvorrichtung (1) Anzeigemittel (2) zur Darstellung des optisch maschinenlesbaren Codes umfasst, wobei die Erfassung der Wartungsinformation durch eine Bewegung des Werkzeugs aktivierbar ist, **dadurch gekennzeichnet, dass**
der optisch maschinenlesbare Code ein Binärcode ist, wobei der optisch maschinenlesbare Code auf graphischen Symbolen basiert, die von einem nach einem optoelektronischen Arbeitsprinzip arbeitenden Lesegerät derart gelesen bzw. erfasst werden können, so dass der optisch maschinenlesbare Code in einen von diesem verschiedenen Code decodiert werden kann, wobei
die Informationsvorrichtung (1) einen Bewegungssensor (20), einen aktivierbaren Wartungsinformationssensor (18) und Steuermittel (18) umfasst, wobei die Steuermittel (18) zum Auswerten der Bewegung sowie zur Bereitstellung eines Aktivierungssignals zur Aktivierung des Wartungsinformationssensors (18) auf Basis des Auswertens der Bewegung ausgestaltet sind.

2. Informationsvorrichtung (1) nach Anspruch 1, wobei der Binärcode ein eindimensionaler Code oder ein zweidimensionaler Code, insbesondere ein QR-Code, ist.

3. Informationsvorrichtung (1) nach einem der vorhergehenden Ansprüche, wobei die Informationsvorrichtung (1) zum Empfangen eines ersten Aktvierungssignals ausgestaltet ist und die Anzeigemittel (2) zur Darstellung des optisch maschinenlesbaren Codes auf Basis des ersten Aktivierungssignals ausgestaltet sind.

4. Informationsvorrichtung (1) nach einem der vorhergehenden Ansprüche, wobei die Informationsvorrichtung (1) zur dynamischen Erzeugung eines menschenlesbaren Codes auf Basis der Wartungsinformation ausgestaltet ist und wobei die Anzeigemittel (2) zur Darstellung des menschenlesbaren Codes ausgestaltet sind.

5. Informationsvorrichtung (1) nach Anspruch 3, wobei die Informationsvorrichtung (1) zum Empfangen eines zweiten Aktvierungssignals ausgestaltet ist und die Anzeigemittel (2) zur Darstellung des menschenlesbaren Codes auf Basis des zweiten Aktivierungssignals ausgestaltet sind.

6. Informationsvorrichtung (1) nach Anspruch 3 oder 5, wobei das erste Aktvierungssignal ein magnetisches Signal ist.

7. Informationsvorrichtung (1) nach Anspruch 5, wobei das zweite Aktivierungssignal ein magnetisches Signal ist.

8. Informationsvorrichtung (1) nach einem der vorhergehenden Ansprüche, wobei die Informationsvorrichtung (1) in kompakter Flachbauweise ausgebildet ist.

9. Informationsvorrichtung (1) nach einem der vorhergehenden Ansprüche, wobei die Informationsvorrichtung (1) in einen Energiesparzustand versetzbar ist.

10. Informationsvorrichtung (1) nach einem der vorhergehenden Ansprüche, wobei die Informationsvorrichtung (1) mindestens einen Energiespeicher zur Energieversorgung umfasst.

11. Informationsvorrichtung (1) nach einem der vorhergehenden Ansprüche, wobei die Informationsvorrichtung (1) Überwachungsmittel (6, 18) zur Überwachung eines Speicherzustandes des Energiespeichers (7) umfasst.

12. Informationsvorrichtung (1) nach einem der vorhergehenden Ansprüche, wobei die Anzeigemittel (2) mindestens ein LCD-Anzeigefeld, ein LED-Anzeigefeld oder ein OLED-Anzeigefeld umfassen.

13. Informationsvorrichtung (1) nach einem der vorhergehenden Ansprüche, wobei die Informationsvorrichtung (1) das Werkzeug oder einen Werkzeughalter zur Halterung des Werkzeugs umfasst, wobei die Anzeigemittel (2) an einem Außenumfang des Werkzeugs beziehungsweise des Werkzeughalters befestigt sind.

14. Baugruppe, umfassend eine Informationsvorrichtung (1) nach einem der vorhergehenden Ansprüche und mindestens ein Baugruppenelement (24), wobei das Baugruppenelement (24) ein für eine Bearbeitung eines Werkstücks vorgesehenes Werkzeug oder ein Werkzeughalter (24) zur Halterung des Werkzeugs ist und die Informationsvorrichtung (1) an dem Werkzeug oder dem Werkzeughalter (24) befestigt ist.

15. Baugruppe nach Anspruch 14, wobei die Informationsvorrichtung (1) an einer Außenmantelfläche (23) des Werkzeugs oder des Werkzeughalters (24) befestigt ist.

## Claims

1. Information device (1) for providing information about the maintenance state of a tool provided to machine a workpiece, wherein the information device (1) is configured to detect maintenance information and to dynamically generate an optically machine-readable code on the basis of the maintenance information, wherein the information device (1) comprises display means (2) for displaying the optically machine-readable code, wherein the detection of the maintenance information is able to be activated by a movement of the tool, **characterized in that** the optically machine-readable code is a binary code, wherein the optically machine-readable code is based on graphic symbols that can be read or detected by a reader operating according to an optoelectronic operating principle in such a way that the optically machine-readable code can be decoded into a code different to said code, wherein the information device (1) comprises a movement sensor (20), an activatable maintenance information sensor (18) and control means (18), wherein the control means (18) are configured to evaluate the movement and to provide an activation signal for activating the maintenance information sensor (18) on the basis of the evaluation of the movement.

2. Information device (1) according to Claim 1, wherein the binary code is a one-dimensional code or a two-dimensional code, in particular a QR code.

3. Information device (1) according to either of the preceding claims, wherein the information device (1) is configured to receive a first activation signal and the display means (2) are configured to display the optically machine-readable code on the basis of the first activation signal.

4. Information device (1) according to one of the preceding claims, wherein the information device (1) is configured to dynamically generate a human-readable code on the basis of the maintenance information, and wherein the display means (2) are configured to display the human-readable code.

5. Information device (1) according to Claim 3, wherein the information device (1) is configured to receive a second activation signal and the display means (2) are configured to display the human-readable code on the basis of the second activation signal.

6. Information device (1) according to Claim 3 or 5, wherein the first activation signal is a magnetic signal.

7. Information device (1) according to Claim 5, wherein the second activation signal is a magnetic signal.

8. Information device (1) according to one of the preceding claims, wherein the information device (1) is of compact flat design.

9. Information device (1) according to one of the preceding claims, wherein the information device (1) is able to be put into an energy-saving state.

10. Information device (1) according to one of the preceding claims, wherein the information device (1) comprises at least one energy storage unit for supplying energy.

11. Information device (1) according to one of the preceding claims, wherein the information device (1) comprises monitoring means (6, 18) for monitoring a storage state of the energy storage unit (7).

12. Information device (1) according to one of the preceding claims, wherein the display means (2) comprise at least one LCD display panel, an LED display panel or an OLED display panel.

13. Information device (1) according to one of the preceding claims, wherein the information device (1) comprises the tool or a tool holder for holding the tool, wherein the display means (2) are fastened to an outer periphery of the tool or of the tool holder.

14. Assembly, comprising an information device (1) according to one of the preceding claims and at least one assembly element (24), wherein the assembly element (24) is a tool provided to machine a workpiece or a tool holder (24) for holding the tool and the information device (1) is fastened to the tool or the tool holder (24).

15. Assembly according to Claim 14, wherein the information device (1) is fastened to an outer lateral surface (23) of the tool or of the tool holder (24).

## Revendications

1. Dispositif d'information (1) permettant d'informer au sujet d'un état de maintenance d'un outil prévu pour un usinage d'une pièce, dans lequel le dispositif d'information (1) est configuré pour détecter une information de maintenance ainsi que pour générer de manière dynamique un code optiquement lisible par machine sur la base de l'information de maintenance, dans lequel le dispositif d'information (1) comprend des moyens d'affichage (2) pour représenter le code optiquement lisible par machine, dans lequel la détection de l'information de maintenance peut être activée par un mouvement de l'outil,
**caractérisé en ce que** le code optiquement lisible par machine est un code binaire, dans lequel le code optiquement lisible par machine est basé sur des symboles graphiques qui peuvent être lus ou détectés par un lecteur fonctionnant selon un principe opérationnel optoélectronique de telle sorte que le code optiquement lisible par machine peut être décodé en un code différent de celui-ci, dans lequel le dispositif d'information (1) comprend un capteur de mouvement (20), un capteur d'information de maintenance (18) pouvant être activé et des moyens de commande (18), dans lequel les moyens de commande (18) sont configurés pour évaluer le mouvement ainsi que pour fournir un signal d'activation pour activer le capteur d'information de maintenance (18) sur la base de l'évaluation du mouvement.

2. Dispositif d'information (1) selon la revendication 1, dans lequel le code binaire est un code unidimensionnel ou un code bidimensionnel, en particulier un code QR.

3. Dispositif d'information (1) selon l'une quelconque des revendications précédentes, dans lequel le dispositif d'information (1) est configuré pour recevoir un premier signal d'activation, et les moyens d'affichage (2) sont configurés pour représenter le code optiquement lisible par machine sur la base du premier signal d'activation.

4. Dispositif d'information (1) selon l'une quelconque des revendications précédentes, dans lequel le dispositif d'information (1) est configuré pour la génération dynamique d'un code lisible par l'homme sur la base de l'information de maintenance, et dans lequel les moyens d'affichage (2) sont configurés pour représenter le code lisible par l'homme.

5. Dispositif d'information (1) selon la revendication 3, dans lequel le dispositif d'information (1) est configuré pour recevoir un deuxième signal d'activation, et les moyens d'affichage (2) sont configurés pour représenter le code lisible par l'homme sur la base du deuxième signal d'activation.

6. Dispositif d'information (1) selon la revendication 3 ou 5, dans lequel le premier signal d'activation est un signal magnétique.

7. Dispositif d'information (1) selon la revendication 5, dans lequel le deuxième signal d'activation est un signal magnétique.

8. Dispositif d'information (1) selon l'une quelconque des revendications précédentes, dans lequel le dispositif d'information (1) est de construction plate compacte.

9. Dispositif d'information (1) selon l'une quelconque des revendications précédentes, dans lequel le dispositif d'information (1) peut être mis dans un état d'économie d'énergie.

10. Dispositif d'information (1) selon l'une quelconque des revendications précédentes, dans lequel le dispositif d'information (1) comprend au moins un accumulateur d'énergie pour l'alimentation en énergie.

11. Dispositif d'information (1) selon l'une quelconque des revendications précédentes, dans lequel le dispositif d'information (1) comprend des moyens de surveillance (6, 18) pour surveiller un état d'accumulation de l'accumulateur d'énergie (7).

12. Dispositif d'information (1) selon l'une quelconque des revendications précédentes, dans lequel les moyens d'affichage (2) comprennent au moins un panneau d'affichage LCD, un panneau d'affichage LED ou un panneau d'affichage OLED.

13. Dispositif d'information (1) selon l'une quelconque des revendications précédentes, dans lequel le dispositif d'information (1) comprend l'outil ou un porte-outil pour supporter l'outil, dans lequel les moyens d'affichage (2) sont fixés sur une circonférence extérieure de l'outil ou du porte-outil, respectivement.

14. Sous-ensemble, comprenant un dispositif d'information (1) selon l'une quelconque des revendications précédentes et au moins un élément de sous-ensemble (24), dans lequel l'élément de sous-ensemble (24) est un outil prévu pour un usinage d'une pièce ou est un porte-outil (24) pour supporter l'outil, et le dispositif d'information (1) est fixé à l'outil ou au porte-outil (24).

15. Sous-ensemble selon la revendication 14, dans lequel le dispositif d'information (1) est fixé à une surface d'enveloppe extérieure (23) de l'outil ou du porte-outil (24) .
